# EUROPEAN PATENT APPLICATION

(11) **EP 4 755 746 A1**
(43) Date of publication of application: **10.06.2026**
(21) Application number: 25220771.7
(22) Date of filing: 04.12.2025
(51) Int. Cl.: B60W 40/04, B60W 30/14, B60W 30/18, B60W 50/00, B60W 50/10

(54) **DRIVING SUPPORT APPARATUS, VEHICLE CONTROL METHOD, AND PROGRAM**

(30) Priority: 04.12.2024 JP 2024210912
(71) Applicant: TOYOTA JIDOSHA KABUSHIKI KAISHA, Toyota-Shi, Aichi-Ken 471-8571 (JP)
(72) Inventor: TODA, Yoshinari, TOYOTA-SHI, AICHI, 471-8571 (JP)
(74) Representative: Cabinet Beau de Loménie

(57) **Abstract**

A driving support apparatus performs roundabout travel control for controlling a travel state of a vehicle such that a vehicle speed matches a predetermined target vehicle speed when the vehicle travels through a roundabout, and curve travel control for performing at least one of suppression of acceleration of the vehicle and deceleration of the vehicle when the vehicle travels through a curve. The driving support apparatus starts the roundabout travel control when a start condition including at least a condition that the roundabout is detected in a travel direction of the vehicle is satisfied. The driving support apparatus suppresses the curve travel control when a predetermined suppression start condition is satisfied after the roundabout travel control starts.

## Description

### TECHNICAL FIELD

The present invention relates to a driving support apparatus configured to perform roundabout travel control for controlling acceleration and deceleration of a vehicle such that a vehicle speed matches a target vehicle speed when the vehicle travels through a roundabout. In particular, the present invention relates to the driving support apparatus also configured to perform curve travel control for performing at least one of: suppression of acceleration of the vehicle; and deceleration of the vehicle, when the vehicle travels through a curve. Furthermore, the present invention relates to a vehicle control method for causing a computer mounted on the vehicle to perform the roundabout travel control and the curve travel control. Furthermore, the present invention also relates to a program for causing the computer to perform the roundabout travel control and the curve travel control.

### BACKGROUND

Conventionally, a driving support apparatus that performs roundabout travel control has been known. For example, a driving support apparatus described in Patent Document 1 (hereinafter referred to as "the conventional apparatus") performs the roundabout travel control for causing a vehicle to travel such that a vehicle speed matches a preset target vehicle speed (in other words, such that the vehicle speed is maintained constant) when the vehicle travels through a roundabout (a circular intersection).

Patent Document 1: Japanese Patent Application Laid-Open No. 2017-088161

### SUMMARY

Conventionally, a driving support apparatus that performs curve travel control for performing at least one of suppression of acceleration of the vehicle and deceleration of the vehicle when the vehicle travels through a curve has been known. Assuming that the conventional apparatus is also capable of performing the curve travel control, the conventional apparatus may perform the curve travel control when the vehicle travels through the roundabout, due to erroneously determining that the vehicle travels through the curve.

When the curve travel control is performed while the vehicle is traveling through the roundabout, the vehicle may decelerate excessively due to the curve travel control, resulting in the vehicle speed becoming lower than the target vehicle speed of the roundabout travel control.

Normally, when the vehicle exits the roundabout, the vehicle accelerates. However, if the curve travel control is performed when the vehicle exits the roundabout, the vehicle may have difficulty accelerating.

The present invention is made to address the above problem. That is, one of the objects of the present invention is to provide the driving support apparatus that reduces a probability that the vehicle decelerates excessively due to the curve travel control when the vehicle travels through the roundabout, and further reduces a probability that the vehicle has difficulty accelerating due to the curve travel control when the vehicle exits the roundabout.

A driving support apparatus according to the present invention (hereinafter referred to as "the present apparatus") is configured to perform:
roundabout travel control for controlling a travel state of a vehicle such that a vehicle speed matches a predetermined target vehicle speed when the vehicle travels through a roundabout; and
curve travel control for performing at least one of suppression of acceleration of the vehicle and deceleration of the vehicle when the vehicle travels through a curve.

The driving support apparatus is configured to:
start the roundabout travel control when a start condition including at least a condition that the roundabout is detected in a travel direction of the vehicle is satisfied; and
suppress the curve travel control when a predetermined suppression start condition is satisfied after the roundabout travel control starts.

When the predetermined suppression start condition is satisfied after the roundabout travel control starts, the curve travel control is suppressed. Accordingly, when the suppression start condition is satisfied while the vehicle is traveling through the roundabout, the present apparatus can reduce the probability that the vehicle decelerates excessively due to the curve travel control. Furthermore, if the suppression start condition is satisfied when the vehicle exits the roundabout, the present apparatus can reduce the probability that the vehicle has difficulty accelerating due to the curve travel control when the vehicle exits the roundabout.

In one aspect of the present apparatus, the present apparatus is configured to determine that the suppression start condition is satisfied by a time at which it is determined that the vehicle has exited the roundabout.

According to this aspect, the curve travel control is suppressed by satisfying the suppression start condition by the time at which it is determined that the vehicle has exited the roundabout. Therefore, the present apparatus can reduce the probability that the vehicle has difficulty accelerating due to the curve travel control when the vehicle exits the roundabout.

In the above aspect, the present apparatus is configured to determine that the suppression start condition is satisfied when the vehicle enters the roundabout and the vehicle speed is equal to or lower than a predetermined suppression start speed.

According to this aspect, the present apparatus can prevent the vehicle speed from becoming lower than the suppression start vehicle speed due to the curve travel control while the vehicle is traveling through the roundabout.

In the above aspect, the present apparatus is configured to set, in advance, the suppression start speed to be equal to the target vehicle speed used in the roundabout travel control.

According to this aspect, the present apparatus can prevent the vehicle speed from becoming lower than the target vehicle speed due to the curve travel control while the vehicle is traveling through the roundabout.

In one aspect of the present apparatus, the present apparatus is configured to terminate the suppression of the curve travel control when a predetermined end time has elapsed from a determination time point at which it is determined that the vehicle has exited the roundabout.

According to the present aspect, the present apparatus does not terminate the suppression of the curve travel control immediately at the determination time point, but terminates it when the predetermined end time has elapsed from the determination time point. Accordingly, the present apparatus can reduce the probability that the vehicle has difficulty accelerating due to the curve travel control when the vehicle exits the roundabout. This situation could otherwise happen if the suppression of the curve travel control is terminated while the vehicle is still traveling through the roundabout.

In the above aspect, the present apparatus is configured to:
determine whether or not the vehicle has exited the roundabout by using either a first determination method or a second determination method; and
vary the end time based on the determination method used for determining that the vehicle has exited the roundabout.

A timing at which it is determined that the vehicle has exited the roundabout is earlier when the first determination method is used than when the second determination method is used.

The present apparatus is configured to set the end time to be longer when it is determined that the vehicle has exited the roundabout by using the first determination method than when it is determined by using the second determination method.

The end time is set based on the determination method, which differs in the timing at which it is determined that the vehicle has exited the roundabout. Accordingly, the present apparatus can reduce the probability that the suppression of the curve travel control is terminated while the vehicle is still traveling through the roundabout.

In the above aspect, the driving support apparatus is configured to:
determine, in the first determination method, whether or not the vehicle has exited the roundabout based on an operation performed by a driver on a steering wheel or a turn signal lever; and
determine, in the second determination method, whether or not the vehicle has exited the roundabout based on map data in which a position of the roundabout is registered and a current position of the vehicle.

Accordingly, the present apparatus can accurately determine whether or not the vehicle has exited the roundabout.

A vehicle control method according to the present invention for causing a computer mounted on a vehicle to perform:
roundabout travel control for controlling a travel state of the vehicle such that a vehicle speed matches a predetermined target vehicle speed when the vehicle travels through a roundabout; and
curve travel control for performing at least one of suppression of acceleration of the vehicle and deceleration of the vehicle when the vehicle travels through a curve.

The vehicle control method comprises:
a step of starting the roundabout travel control when a start condition including at least a condition that the roundabout is detected in a travel direction of the vehicle is satisfied; and
a step of suppressing the curve travel control when a predetermined suppression start condition is satisfied after the roundabout travel control starts.

A program for causing a computer mounted on a vehicle to perform:
roundabout travel control for controlling a travel state of the vehicle such that a vehicle speed matches a predetermined target vehicle speed when the vehicle travels through a roundabout; and
curve travel control for performing at least one of suppression of acceleration of the vehicle and deceleration of the vehicle when the vehicle travels through a curve.

The program causes the computer to:
start the roundabout travel control when a start condition including at least a condition that the roundabout is detected in a travel direction of the vehicle is satisfied; and
suppress the curve travel control when a predetermined suppression start condition is satisfied after the roundabout travel control starts.

Accordingly, when the suppression start condition is satisfied while the vehicle is traveling through the roundabout, a probability that the vehicle decelerates excessively due to the curve travel control can be reduced. Furthermore, if the suppression start condition is satisfied when the vehicle exits the roundabout, a probability that the vehicle has difficulty accelerating due to the curve travel control when the vehicle exits the roundabout can be reduced.

### BRIEF DESCRIPTION OF THE DRAWINGS

FIG. 1 is a schematic system configuration diagram of a driving support apparatus according to an embodiment of the present invention.
FIG. 2 is an explanatory diagram illustrating an example of operation of the driving support apparatus according to the embodiment of the present invention.
FIG. 3 is a flowchart illustrating a curve determination routine executed by a CPU of an ECU shown in FIG. 1.
FIG. 4 is a flowchart illustrating a curve travel control routine executed by the CPU of the ECU shown in FIG. 1.
FIG. 5 is a flowchart illustrating a roundabout determination routine executed by the CPU of the ECU shown in FIG. 1.
FIG. 6 is a flowchart illustrating a part of a roundabout travel control routine executed by the CPU of the ECU shown in FIG. 1.
FIG. 7 is a flowchart illustrating a remaining part of the roundabout travel control routine executed by the CPU of the ECU shown in FIG. 1.
FIG. 8 is a flowchart illustrating an operation-based exit determination subroutine executed by the CPU of the ECU shown in FIG. 1.
FIG. 9 is a flowchart illustrating a map-based exit determination subroutine executed by the CPU of the ECU shown in FIG. 1.
FIG. 10 is a flowchart illustrating an actuator control routine executed by the CPU of the ECU shown in FIG. 1.

### DETAILED DESCRIPTION

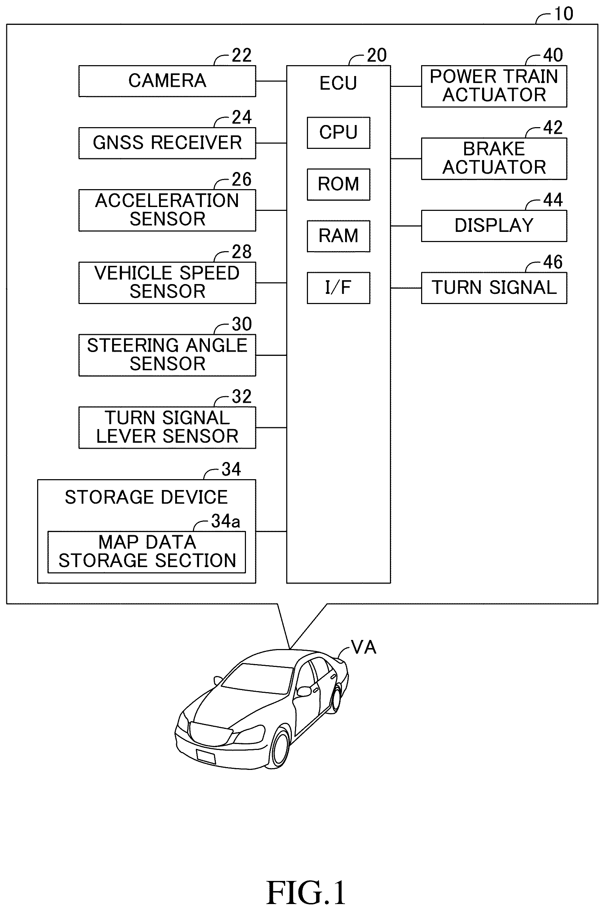

A driving support apparatus 10 according to an embodiment of the present invention (hereinafter, referred to as "the present apparatus 10") is applied to a vehicle VA and includes components shown in FIG. 1. In the present specification, an "ECU 20" is an electronic control unit having a microcomputer as a main component. The ECU 20 is also referred to as a control unit, a controller and a computer. The microcomputer includes a CPU (processor), a ROM, a RAM and an interface (I/F), etc. Functions realized by the ECU 20 may be realized by multiple ECUs.

A camera 22 acquires image data by capturing a scene in front of the vehicle VA. The ECU 20 obtains the image data from the camera 22. A GNSS (Global Navigation Satellite System) receiver 24 receives signals from multiple satellites and identifies a current position (latitude and longitude) of the vehicle VA based on the received signals. The ECU 20 obtains the current position of the vehicle VA from the GNSS receiver 24.

An acceleration sensor 26 measures an acceleration G in a longitudinal direction of the vehicle VA. A vehicle speed sensor 28 measures a vehicle speed Vs representing a speed of the vehicle VA. A steered angle sensor 30 measures a steering angle θ of a steering wheels (not shown) of the vehicle VA. A turn signal lever sensor 32 detects a position of a turn signal lever. The ECU 20 obtains measurement values and a detection value from these sensors 26 to 32.

A storage device 34 includes a map data storage section 34a. Map data in which positions (latitudes and longitudes) of roundabouts are registered are stored in the map data storage section 34a.

A power train actuator 40 changes a driving force generated by a driving device (e.g., an internal combustion engine and/or an electric motor) of the vehicle VA. A brake actuator 42 changes a braking force applied to the vehicle VA. A display 44 is, for example, a meter display. A turn signal 46 activates (lights up) in accordance with an operation of the turn signal lever.

### <Curve Travel Control>

An example of a curve travel control is described. In the curve travel control, the ECU 20 decelerates the vehicle speed Vs to a curve target vehicle speed Vcv suitable for the vehicle VA to travel through a curve, and causes the vehicle VA to travel through the curve at the curve target vehicle speed Vcv. Specifically, the ECU 20 sets a curve target acceleration Gcv to a predetermined deceleration until the vehicle speed Vs matches the curve target vehicle speed Vcv. After the vehicle speed Vs matches the curve target vehicle speed Vcv, the ECU 20 sets the curve target acceleration Gcv to an acceleration for maintaining the vehicle speed Vs at the curve target vehicle speed Vcv.

The ECU 20 starts the curve travel control when all of the following conditions C1 to C3 are satisfied.

Condition C1: The ECU 20 detects the curve.

Condition C2: A distance Dc between the vehicle VA and an entrance of the curve is equal to or shorter than a curve start distance Dcv.

Condition C3: The vehicle speed Vs is higher than the curve target vehicle speed Vcv.

### <Condition C1>

The ECU 20 detects a white line located at a predetermined distance ahead of the vehicle VA based on the image data, and acquires a curvature of the white line. The white line is a line that defines a lane in which the vehicle VA is traveling. When the curvature of the white line is equal to or greater than a predetermined start curvature threshold, the ECU 20 determines that the curve exists (i.e., the ECU 20 determines that the ECU 20 detects the curve).

### <Condition C2>

The ECU 20 acquires a smaller curve target vehicle speed Vcv as the curvature increases. The ECU 20 acquires, as the curve start distance Dcv, a distance over which the vehicle VA needs to travel until the vehicle speed Vs at the time at which the vehicle VA reaches the entrance of the curve matches the curve target vehicle speed Vcv, under an assumption that the vehicle VA decelerates at a predetermined negative acceleration (i.e., deceleration).

In the curve travel control, the ECU 20 suppresses acceleration of the vehicle VA so that the acceleration G does not exceed a predetermined positive maximum acceleration Gmax.

### <Roundabout Travel Control>

An example of roundabout travel control is described. In the roundabout travel control, the ECU 20 decelerates the vehicle speed Vs to a predetermined roundabout target vehicle speed Vra and causes the vehicle VA to travel through the roundabout at the roundabout target vehicle speed Vra. Specifically, the ECU 20 sets a roundabout target acceleration Gra to a predetermined deceleration until the vehicle speed Vs matches the roundabout target vehicle speed Vra. After the vehicle speed Vs matches the roundabout target vehicle speed Vra, the ECU 20 sets the roundabout target acceleration Gra to an acceleration for maintaining the vehicle speed Vs at the roundabout target vehicle speed Vra.

The ECU 20 starts the roundabout travel control when all of the following conditions R1 to R3 are satisfied.

Condition R1: The ECU 20 detects the roundabout.

Condition R2: A distance Dr between the vehicle VA and an entrance of the roundabout is equal to or shorter than a start distance Dra1, which is set to be longer as the vehicle speed Vs increases.

Condition R3: The vehicle speed Vs is higher than the roundabout target vehicle speed Vra.

### <Condition R1>

The ECU 20 obtains the current position of the vehicle VA from the GNSS receiver 24. The ECU 20 refers to map data to determine whether or not the roundabout exists within a predetermined distance in a travel direction from the current position of the vehicle VA. If the roundabout exists, the ECU 20 detects the roundabout.

### <Condition R2>

The distance Dr is acquired based on the current position of the vehicle VA and the position of the roundabout in the map data.

### <Outline of Operation >

The present apparatus 10 suppresses the curve travel control when a predetermined suppression start condition is satisfied after the roundabout travel control has been started. Specifically, when the suppression start condition is satisfied, even if the curve target acceleration Gcv has been acquired, the present apparatus 10 sets the curve target acceleration Gcv to an invalid value. As a result, when the suppression start condition is satisfied, the curve travel control is substantially not performed. Accordingly, even if the curve travel control is performed while the vehicle VA is traveling through the roundabout, the present apparatus 10 can reduce a probability that the vehicle speed Vs becomes lower than the roundabout target vehicle speed Vra due to the curve travel control (that is, the probability that the vehicle VA decelerates excessively due to the curve travel control). Furthermore, the present apparatus 10 can also reduce a probability that the vehicle VA has difficulty accelerating due to the curve travel control when the vehicle VA exits the roundabout.

The suppression start condition is satisfied when the vehicle VA reaches the roundabout and the vehicle speed Vs is equal to or lower than a predetermined suppression start speed. In the present embodiment, the suppression start speed is set to the roundabout target vehicle speed Vra.

### (Operation Example)

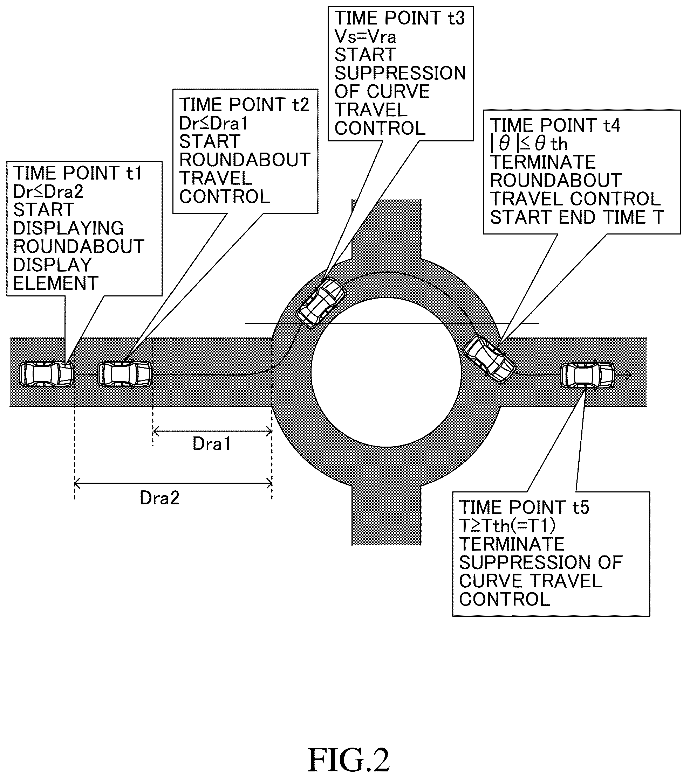

An operation example of the ECU 20 is described with reference to FIG. 2. The ECU 20 refers to map data to determine whether or not the roundabout exists within the predetermined distance in the traveling direction from the current position of the vehicle VA. If the roundabout exists, the ECU 20 acquires the start distance Dra1 based on the vehicle speed Vs. The ECU 20 also acquires, as a display start distance Dra2, a distance acquired by adding a distance Dp to the start distance Dra1. The distance Dp is a distance that the vehicle VA travels at the current vehicle speed Vs during a predetermined time.

At time point t1, the distance Dr between the vehicle VA and the entrance of the roundabout becomes equal to or shorter than the display start distance Dra2. In this case, the ECU 20 displays, on the display 44, a roundabout display element indicating that the vehicle VA is traveling through the roundabout.

At time point t2, the distance Dr becomes equal to or shorter than the start distance Dra1. In this case, the ECU 20 starts the roundabout travel control and starts to decelerate the vehicle VA at a predetermined deceleration.

Thereafter, the vehicle VA enters the roundabout while decelerating, and at time point t3, the vehicle speed Vs matches the roundabout target vehicle speed Vra. In this case, since the above-described suppression start condition is satisfied, the ECU 20 starts to suppress the curve travel control. Because the curvature of the white line near the entrance of the roundabout may be equal to or greater than the threshold curvature, the ECU 20 may erroneously recognize the roundabout as a curve. As a result, the ECU 20 may erroneously perform the curve travel control while the vehicle VA is traveling through the roundabout. However, even if the curve travel control is erroneously performed, the curve travel control is suppressed, so the probability that the vehicle VA decelerates excessively and has difficulty accelerating can be reduced.

Thereafter, at time point t4, the ECU 20 determines that the vehicle VA has exited the roundabout. In this case, the ECU 20 terminates the roundabout travel control. It should be noted that either an operation-based exit determination (first determination method) or a map-based exit determination (second determination method) is used to determine whether or not the vehicle VA has exited the roundabout.

In the operation-based exit determination, the ECU 20 determines that the vehicle VA has exited the roundabout when at least one of a first operation-based exit condition and a second operation-based exit condition is satisfied. The first operation-based exit condition is satisfied when an absolute value of the steering angle θ (|θ|) is equal to or greater than a threshold angle θth and the current steering direction is opposite to a roundabout steering direction. The round steering direction is a steering direction while the vehicle is traveling through the roundabout. The second operation-based exit condition is satisfied when the turn signal lever has been operated. When the vehicle VA exits the roundabout, a driver is likely to steer the steering wheel significantly in a direction opposite to the roundabout steering direction. Furthermore, when the vehicle VA exits the roundabout, the driver is also likely to operate the turn signal lever to activate the turn signal 46. Therefore, when at least one of the first operation-based exit condition and the second operation-based exit condition is satisfied, the ECU 20 determines that the vehicle VA has exited the roundabout.

In the map-based exit determination, the ECU 20 refers to map data and determines that the vehicle VA has exited the roundabout when it is determined that the current position of the vehicle VA is outside the roundabout. Even when the vehicle VA exits the roundabout without the driver steering the steering wheel significantly in the direction opposite to the roundabout steering direction and operating the turn signal lever, the ECU 20 can determine that the vehicle VA has exited the roundabout based on the map-based exit determination.

When the ECU 20 determines that the vehicle VA has exited the roundabout based on the operation-based exit determination, the ECU 20 sets an end time Tth to a first time T1. On the other hand, when the ECU 20 determines that the vehicle VA has exited the roundabout based on the map-based exit determination, the ECU 20 sets the end time Tth to a second time T2. The first time T1 is set to a greater value than the second time T2.

At time point t5, an elapsed time T from the time point at which it is determined that the vehicle VA has exited the roundabout becomes equal to or greater than the end time Tth. In this case, the ECU 20 terminates the suppression of the curve travel control. Normally, when the vehicle VA is located inside the roundabout, the driver performs a steering operation in order to exit the roundabout or operates the turn signal lever. Therefore, normally, the timing at which it is determined that the vehicle VA has exited the roundabout is earlier in the operation-based exit determination than in the map-based exit determination. Since the first time T1 is set to a greater value than the second time T2, a probability that the suppression of the curve travel control is terminated after the vehicle VA has exited the roundabout becomes high. This is because, if the suppression of the curve travel control is terminated before the vehicle VA has exited the roundabout, the vehicle VA may have difficulty accelerating when exiting the roundabout due to the curve travel control.

### (Specific operation)

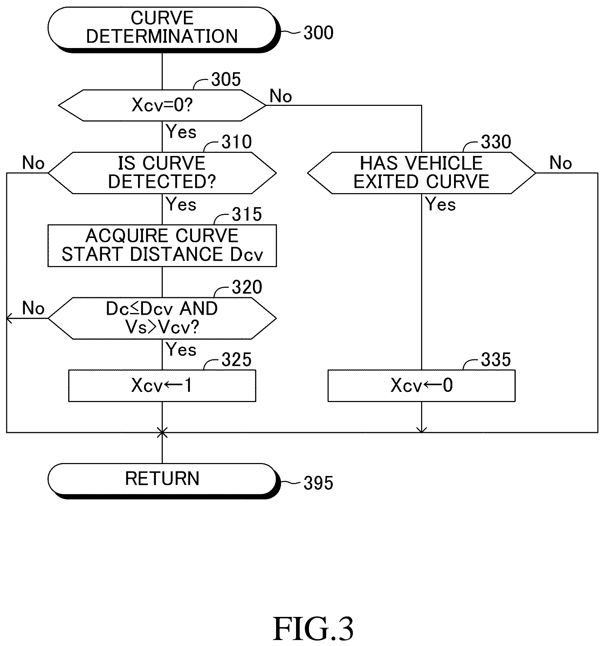

The CPU of the ECU 20 executes routines shown in flowcharts in FIGs. 3 to 6 and FIG. 10, each time a predetermined time has elapsed.

### <Curve Determination Routine >

When an appropriate time comes, the CPU starts a process from step 300 in FIG. 3, and the process proceeds to step 305. At step 305, the CPU determines whether or not a curve flag Xcv is "0". The curve flag Xcv is set to "1" when the curve travel control is performed, and is set to "0" when the curve travel control is not performed. The curve flag Xcv is set to "0" by an initialization routine. The initialization routine is executed by the CPU when an ignition key switch (not shown) of the vehicle VA is changed from an OFF position to an ON position.

If the curve flag Xcv is "0", the CPU makes a "Yes" determination at step 305, and the process proceeds to step 310. At step 310, the CPU determines whether or not the curve is detected, as described above.

If the curve is not detected, the CPU makes a "No" determination at step 310, and the process proceeds to step 395. At step 395, the CPU tentatively terminates this routine.

On the other hand, if the curve is detected, the CPU makes a "Yes" determination at step 310, and executes steps 315 and 320.

Step 315: The CPU acquires the curve start distance Dcv based on the curve target vehicle speed Vcv corresponding to the curvature of the white line and the current vehicle speed Vs.

Step 320: The CPU determines whether or not the distance Dc is equal to or shorter than the curve start distance Dcv and the vehicle speed Vs is higher than the curve target vehicle speed Vcv.

If the distance Dc is longer than the curve start distance Dcv or the vehicle speed Vs is equal to or lower than the curve target vehicle speed Vcv, the CPU makes a "No" determination at step 320, and the process proceeds to step 395. On the other hand, if the distance Dc is equal to or shorter than the curve start distance Dcv and the vehicle speed Vs is higher than the curve target vehicle speed Vcv, the CPU makes a "Yes" determination at step 320, and the process proceeds to step 325. At step 325, the CPU sets the curve flag Xcv to "1", and the process proceeds to step 395.

If the curve flag Xcv is "1" when the process proceeds to step 305, the CPU makes a "No" determination at step 305, and the process proceeds to step 330. At step 330, the CPU determines whether or not the vehicle VA has exited the curve. Specifically, the CPU determines that the vehicle VA has exited the curve when the curvature of the white line is equal to or less than an end threshold curvature, which is smaller than the start threshold curvature.

If the vehicle VA has not exited the curve, the CPU makes a "No" determination at step 330, and the process proceeds to step 395. On the other hand, if the vehicle VA has exited the curve, the CPU makes a "Yes" determination at step 330, and the process proceeds to step 335. At step 335, the CPU sets the curve flag Xcv to "0", and the process proceeds to step 395.

### <Curve Travel Control Routine>

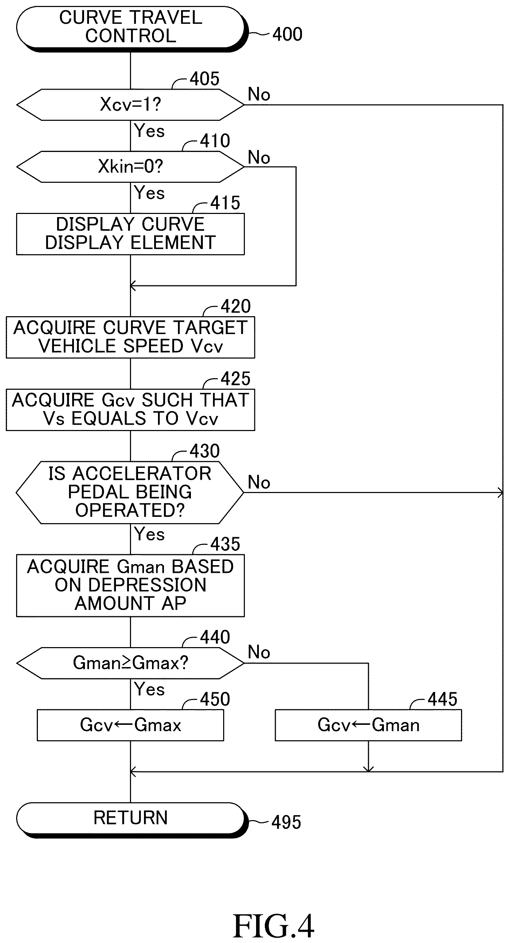

When an appropriate time comes, the CPU starts a process from step 400 shown in FIG. 4, and the process proceeds to step 405. At step 405, the CPU determines whether or not the curve flag Xcv is "1".

If the curve flag Xcv is "0", the CPU makes a "No" determination at step 405, and the process proceeds to step 495. At step 495, the CPU tentatively terminates this routine. If the curve flag Xcv is "1", the CPU makes a "Yes" determination at step 405, and the process proceeds to step 410.

At step 410, the CPU determines whether or not a display inhibition flag Xkin is "0". When the CPU performs the curve travel control, the CPU displays a curve display element on the display 44, which indicates that the vehicle VA is traveling through the curve. The display inhibition flag Xkin is set to "1" when the display of the curve display element is inhibited, and is set to "0" when the display is permitted. The display inhibition flag Xkin is set to "0" in the initialization routine.

If the display inhibition flag Xkin is "0", the CPU makes a "Yes" determination at step 410 and executes steps 415 through 430.

Step 415: The CPU displays the curve display element on the display 44.

Step 420: The CPU acquires the curve target vehicle speed Vcv in accordance with the curvature of the curve.

Step 425: The CPU acquires the curve target acceleration Gcv such that the vehicle speed Vs equals to the curve target vehicle speed Vcv.

Step 430: The CPU determines whether or not an accelerator pedal (not shown) of the vehicle VA is being operated.

If the accelerator pedal is not being operated, the CPU makes a "No" determination at step 430, and the process proceeds to step 495.

If the accelerator pedal is being operated, the CPU makes a "Yes" determination at step 430, and executes steps 435 and 440.

Step 435: The CPU acquires a manual acceleration Gman based on a depression amount of the accelerator pedal.

Step 440: The CPU determines whether or not the manual acceleration Gman is equal to or greater than a predetermined maximum acceleration Gmax.

If the manual acceleration Gman is smaller than the maximum acceleration Gmax, the CPU makes a "No" determination at step 440, and the process proceeds to step 445. At step 445, the CPU sets the curve target acceleration Gcv to the manual acceleration Gman. Thereafter, the process proceeds to step 495.

If the manual acceleration Gman is equal to or greater than the maximum acceleration Gmax, the CPU makes a "Yes" determination at step 440, and sets the curve target acceleration Gcv to the maximum acceleration Gmax. Thereafter, the process proceeds to step 495. Accordingly, when the curve travel control is performed, the acceleration G is suppressed from exceeding the maximum acceleration Gmax even if the accelerator pedal is operated.

If the display inhibition flag Xkin is "1" when the process proceeds to step 410, the CPU makes a "No" determination at step 410, and the process proceeds to step 420. As a result, the curve display element is not displayed on the display 44.

### <Roundabout Determination Routine>

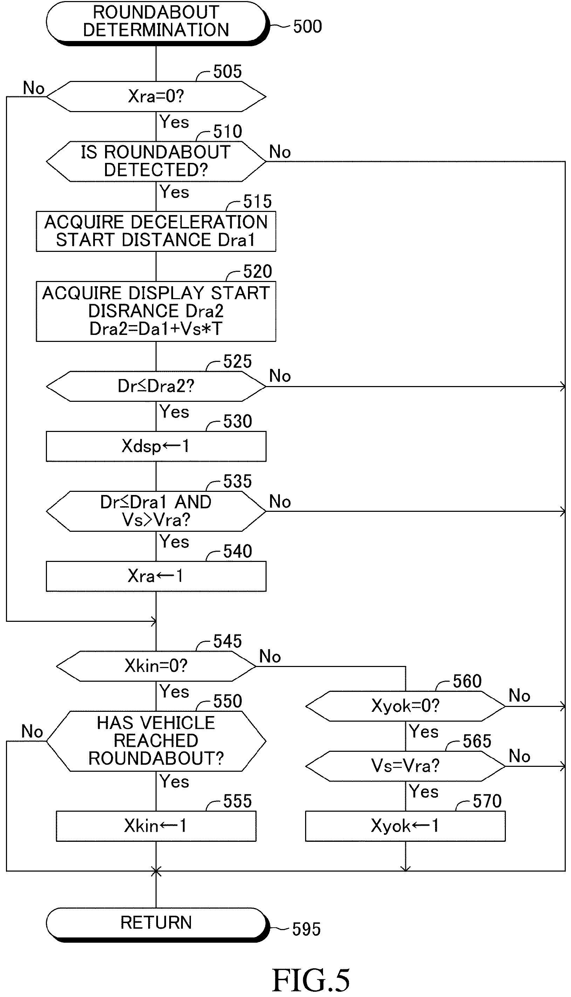

When an appropriate time comes, the CPU starts a process from step 500 in FIG. 5, and the process proceeds to step 505. At step 505, the CPU determines whether or not a roundabout flag Xra is "0".

The roundabout flag Xra is set to "1" when the roundabout travel control is performed, and set to "0" when the roundabout travel control is not performed. The roundabout flag Xra is set to "0" in the initialization routine.

If the roundabout flag Xra is "0", the CPU makes a "Yes" determination at step 505, and the process proceeds to step 510. At step 510, the CPU determines whether or not the roundabout is detected (see the condition R1 described above).

If the roundabout is not detected, the CPU makes a "No" determination at step 510, and the process proceeds to step 595. At step 595, the CPU tentatively terminates this routine.

If the roundabout is detected, the CPU makes a "Yes" determination at step 510, and executes steps 515 to 525.

Step 515: The CPU acquires the start distance Dra1 based on the vehicle speed Vs.

Step 520: The CPU acquires the display start distance Dra2.

Step 525: The CPU determines whether or not the distance Dr is equal to or shorter than the display start distance Dra2.

If the distance Dr is longer than the display start distance Dra2, the CPU makes a "No" determination at step 525, and the process proceeds to step 595. If the distance Dr is equal to or shorter than the display start distance Dra2, the CPU makes a "Yes" determination at step 525, and executes steps 530 and 535.

Step 530: The CPU sets a roundabout display flag Xdsp to "1".

The roundabout display flag Xdsp is set to "1" when the roundabout display element is displayed, and set to "0" when the roundabout display element is not displayed. The roundabout display flag Xdsp is set to "0" in the initialization routine.

Step 535: The CPU determines whether or not the distance Dr is equal to or shorter than the start distance Dra1 and the vehicle speed Vs is higher than the roundabout target vehicle speed Vra.

If the distance Dr is longer than the start distance Dra1 or the vehicle speed Vs is equal to or lower than the roundabout target vehicle speed Vra, the CPU makes a "No" determination at step 535, and the process proceeds to step 595. If the distance Dr is equal to or shorter than the start distance Dra1 and the vehicle speed Vs is greater than the roundabout target vehicle speed Vra, the CPU makes a "Yes" determination at step 535, and executes steps 540 and 545.

Step 540: The CPU sets the roundabout flag Xra to "1".

Step 545: The CPU determines whether or not the display inhibition flag Xkin is "0".

If the display inhibition flag Xkin is "0", the CPU makes a "Yes" determination at step 545, and the process proceeds to step 550. At step 550, the CPU determines whether or not the vehicle VA has reached the roundabout based on the map data.

If the vehicle VA has not reached the roundabout, the CPU makes a "No" determination at step 550, and the process proceeds to step 595.

If the vehicle VA has reached the roundabout, the CPU makes a "Yes" determination at step 550, and the process proceeds to step 555. At step 555, the CPU sets the display inhibition flag Xkin to "1". Thereafter, the process proceeds to step 595.

If the roundabout flag Xra is "1" when the process proceeds to step 505, the CPU makes a "No" determination at step 505, and the process proceeds to step 545. If the display inhibition flag Xkin is "1" (that is, the vehicle VA has reached the roundabout) when the process proceeds to step 545, the CPU makes a "No" determination at step 545, and the process proceeds to step 560.

At step 560, the CPU determines whether or not a suppression flag Xyok is "0". The suppression flag Xyok is set to "1" when the curve travel control is suppressed, and set to "0" when the curve travel control is not suppressed. The suppression flag Xyok is set to "0" in the initialization routine.

If the suppression flag Xyok is "0", the CPU makes a "Yes" determination at step 560, and the process proceeds to step 565. At step 565, the CPU determines whether or not the vehicle speed Vs matches the roundabout target vehicle speed Vra.

If the vehicle speed Vs is higher than the roundabout target vehicle speed Vra, the CPU makes a "No" determination at step 565, and the process proceeds to step 595. If the vehicle speed Vs matches the roundabout target vehicle speed Vra, the CPU determines that the suppression start condition is satisfied. In this case, the CPU makes a "Yes" determination at step 565, and the process proceeds to step 570.

At step 570, the CPU sets the suppression flag Xyok to "1". Thereafter, the process proceeds to step 595.

If the suppression flag Xyok is "1" when the process proceeds to step 560, the CPU makes a "No" determination at step 560, and the process proceeds to step 595.

### <Roundabout Travel Control Routine>

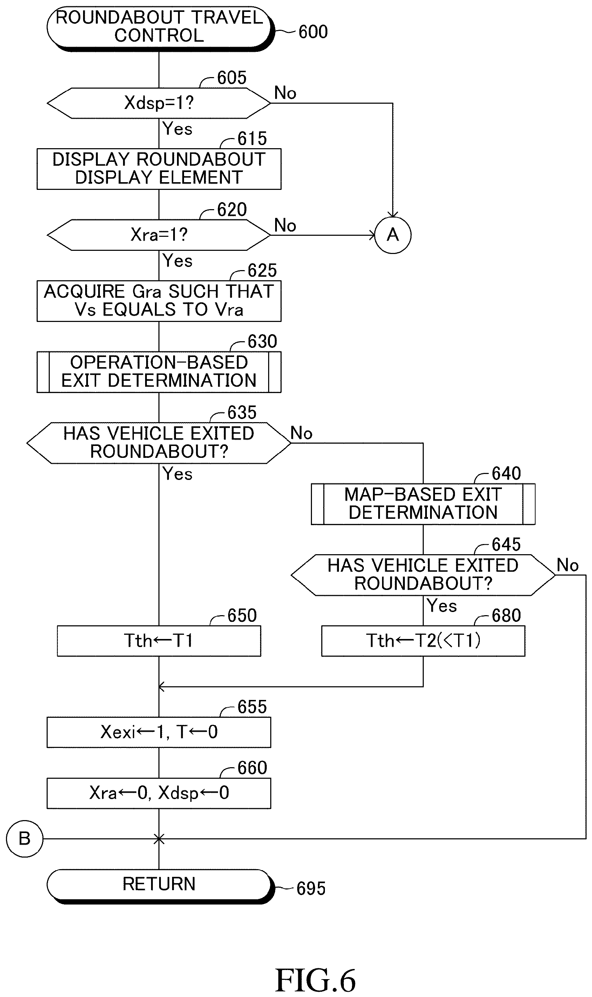

When an appropriate time comes, the CPU starts a process from step 600 in FIG. 6, and the process proceeds to step 605. At step 605, the CPU determines whether or not the roundabout display flag Xdsp is "1".

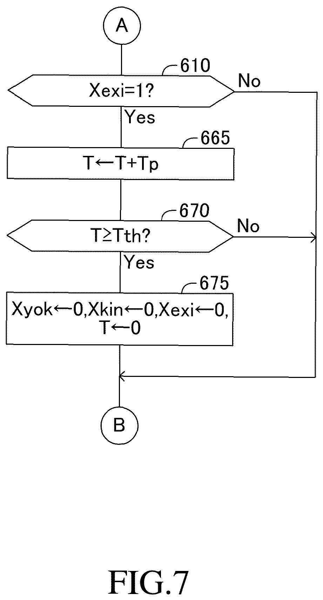

If the roundabout display flag Xdsp is "0", the CPU makes a "No" determination at step 605, and the process proceeds to step 610 shown in FIG. 7. At step 610, the CPU determines whether or not an exit flag Exi is "1". The exit flag Exi is set to "1" when the vehicle VA has exited the roundabout. The exit flag Exi is set to "0" when the suppression of the curve travel control is terminated as a result of the end time Tth elapsing from a determination time point. The determination time point is a time point at which the CPU determines that the vehicle VA has exited the roundabout. The exit flag Exi is set to "0" in the initialization routine.

If the exit flag Exi is "0", the CPU makes a "No" determination at step 610, and the process proceeds to step 695 shown in FIG. 6. At step 695, the CPU tentatively terminates this routine.

If the roundabout display flag Xdsp is "1" when the process proceeds to step 605, the CPU makes a "Yes" determination at step 605, and executes steps 615 and 620.

Step 615: The CPU displays the roundabout display element on the display 44.

Step 620: The CPU determines whether or not the roundabout flag Xra is "1".

If the roundabout flag Xra is "0", the CPU makes a "No" determination at step 620, and the process proceeds to step 610 shown in FIG. 7. If the roundabout flag Xra is "1", the CPU makes a "Yes" determination at step 620 in FIG. 6 and executes steps 625 to 635.

Step 625: The CPU acquires the roundabout target acceleration Gra for matching the vehicle speed Vs to the roundabout target vehicle speed Vra.

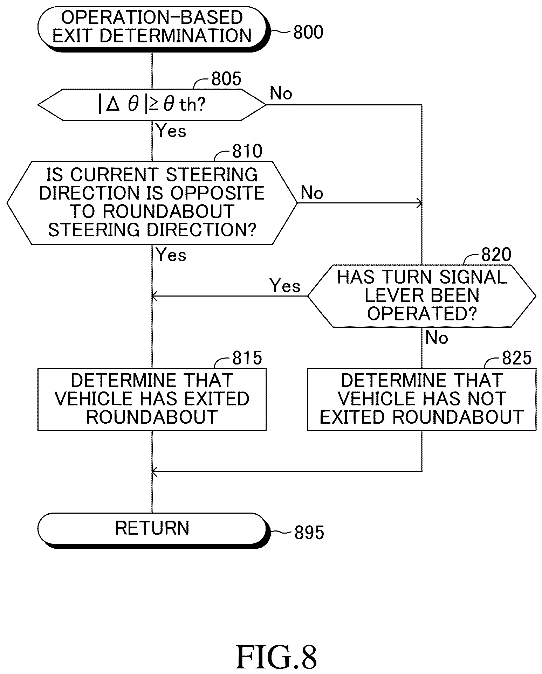

Step 630: The CPU executes an operation-based exit determination subroutine shown in FIG. 8. The operation-based exit determination subroutine will be described later.

Step 635: The CPU determines whether or not it is determined that the vehicle VA has exited the roundabout in the operation-based exit determination subroutine.

If it is determined that the vehicle VA exits the roundabout in the operation-based exit determination subroutine, the CPU makes a "No" determination at step 635 and executes steps 640 and 645.

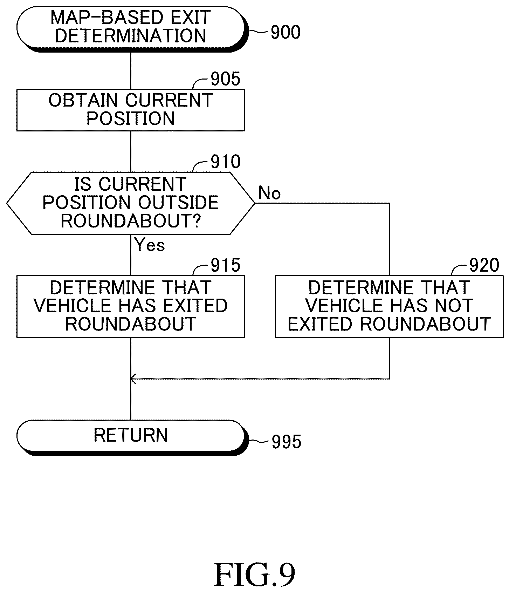

Step 640: The CPU executes a map-based exit determination subroutine shown in FIG. 9. The map-based exit determination subroutine will be described later.

Step 645: The CPU determines whether or not it is determined that the vehicle VA has exited the roundabout in the map-based exit determination subroutine.

If it is determined that the vehicle VA has not exited the roundabout in the map-based exit determination subroutine, the CPU makes a "No" determination at step 645, and the process proceeds to step 695.

If it is determined that the vehicle VA has exited the roundabout in the operation-based exit determination subroutine when the process proceeds to step 635, the CPU makes a "Yes" determination at step 635 and executes steps 650 to 660. Thereafter, the process proceeds to step 695.

Step 650: The CPU sets the end time Tth to the first time T1.

Step 655: The CPU sets the exit flag Exi to "1" and sets the elapsed time T to "0".

The elapsed time T is the time elapsed from the above-described determination time point.

Step 660: The CPU sets the roundabout flag Xra to "0" and sets the roundabout display flag Xdsp to "0".

Thereafter, the process proceeds to step 695.

If the exit flag Exi is "1" when the process proceeds to step 610 shown in FIG. 7, the CPU makes a "Yes" determination at step 610 and executes steps 665 and 670.

Step 665: The CPU adds an execution cycle Tp of this routine to the elapsed time T.

Step 670: The CPU determines whether or not the elapsed time T is equal to or greater than the end time Tth.

If the elapsed time T is less than the end time Tth, the CPU makes a "No" determination at step 670, and the process proceeds to step 695 shown in FIG. 6. On the other hand, if the elapsed time T is equal to or greater than the end time Tth, the CPU makes a "Yes" determination at step 670 in FIG. 7 and the process proceeds to step 675. At step 675, the CPU sets the suppression flag Xyok, the display inhabitation flag Xkin, and the exit flag Exi to "0", and sets the elapsed time Tto "0".

Thereafter, the process proceeds to step 695 shown in FIG. 6.

If it is determined that the vehicle VA has exited the roundabout in the map-based exit determination subroutine when the process proceeds to step 645 shown in FIG. 6, the CPU makes a "Yes" determination at step 645, and the process proceeds to step 680. At step 680, the CPU sets the end time Tth to the second time T2, which is smaller than the first time T1. Thereafter, the process proceeds to step 655.

### <Operation-based Exit Determination Subroutine>

When the process proceeds to step 630 shown in FIG. 6, the CPU starts a process from step 800 shown in FIG. 8, and the process proceeds to step 805. At step 805, the CPU determines whether or not the absolute value of the steering angle θ (|θ|) is equal to or greater than the threshold angle θth.

If the absolute value of the steering angle θ (|θ|) is equal to or greater than the threshold angle θth, the CPU makes a "Yes" determination at step 805, and the process proceeds to step 810. At step 810, the CPU determines whether or not the current steering direction is opposite to the roundabout steering direction representing the steering direction while the vehicle VA is traveling through the roundabout.

The CPU obtains the steering direction at predetermined time intervals during a period in which the roundabout flag is "1". The CPU identifies the steering direction maintained for a longer time during that period as the roundabout steering direction. Note that the steering direction is either right or left.

If the current steering direction is opposite to the roundabout steering direction, the first operation-based exit condition is satisfied. In this case, the CPU makes a "Yes" determination at step 810, and the process proceeds to step 815. At step 815, the CPU determines that the vehicle VA has exited the roundabout. At step 895, the CPU tentatively terminates this subroutine. Thereafter, the process proceeds to step 635 shown in FIG. 6.

If the absolute value of the steering angle θ (|θ|) is smaller than the threshold angle θth when the process proceeds to step 805 shown in FIG. 8, the CPU makes a "No" determination at step 805, and the process proceeds to step 820. At step 820, the CPU determines whether or not the turn signal lever has been operated.

If the turn signal lever has been operated, the second operation-based exit condition is satisfied. In this case, the CPU makes a "Yes" determination at step 820, and the process proceeds to step 815. On the other hand, if the turn signal lever has not been operated, neither the first nor the second operation-based exit condition is satisfied. In this case, the CPU makes a "No" determination at step 820, and the process proceeds to step 825. At step 825, the CPU determines that the vehicle VA has not exited the roundabout. Thereafter, the process proceeds to step 895.

If the current steering direction is the same as the roundabout steering direction when the process proceeds to step 810, the CPU makes a "No" determination at step 810, and the process proceeds to step 820.

### <Map-Based Exit Determination Subroutine>

When the process proceeds to step 640 shown in FIG. 6, the CPU starts a process from step 900 shown in FIG. 9, and executes steps 905 and 910.

Step 905: The CPU obtains the current position of the vehicle VA from the GNSS receiver 24.

Step 910: The CPU determines whether or not the current position of the vehicle VA is outside the roundabout based on the map data.

If the current position of the vehicle VA is outside the roundabout, the CPU makes a "Yes" determination at step 910, and the process proceeds to step 915. At step 915, the CPU determines that the vehicle VA has exited the roundabout. At step 995, the CPU tentatively terminates this subroutine. Thereafter the process proceeds to step 645 shown in FIG. 6.

If the current position of the vehicle VA is inside the roundabout, the CPU makes a "No" determination at step 910, and the process proceeds to step 920. At step 920, the CPU determines that the vehicle VA has not exited the roundabout. Thereafter, the process proceeds to step 995.

### <Actuator Control Routine>

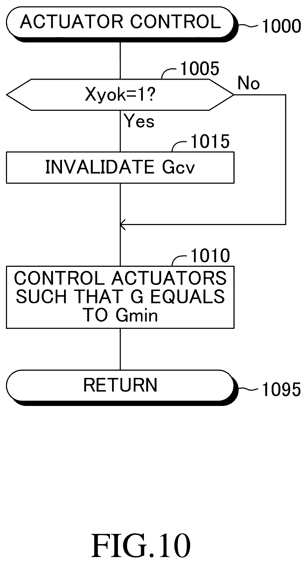

When an appropriate time point comes, the CPU starts a process from step 1000 in FIG. 10, and the process proceeds to step 1005. At step 1005, the CPU determines whether or not the suppression flag Xyok is "1".

If the suppression flag Xyok is "0", the CPU makes a "No" determination at step 1005, and the process proceeds to step 1010. At step 1010, the CPU selects the smaller one of the curve target acceleration Gcv and the roundabout target acceleration Gra as a minimum acceleration Gmin, and controls the powertrain actuator 40 and the brake actuator 42 such that the acceleration G matches the minimum acceleration Gmin. Thereafter, the process proceeds to step 1095, and the CPU tentatively terminates this routine.

If the suppression flag Xyok is "1", the CPU makes a "Yes" determination at step 1005, and the process proceeds to step 1015. At step 1015, the CPU invalidates the curve target acceleration Gcv. Specifically, the CPU sets the curve target acceleration Gcv to an invalid value. Thereafter, the process proceeds to step 1010. In this case, the invalidated curve target acceleration Gcv is not selected as the minimum acceleration Gmin. Therefore, at step 1010, the CPU controls the powertrain actuator 40 and the brake actuator 42 such that the acceleration G matches the roundabout target acceleration Gra. Thereafter, the process proceeds to step 1095.

In the present embodiment, the curve travel control is suppressed during a period from a time point at which the suppression start condition is satisfied to a time point at which the end time Tth has elapsed from the determination time point at which it is determined, in either the operation-based exit determination or the map-based exit determination, that the vehicle VA has exited the roundabout. Accordingly, the present apparatus 10 can reduce the probability that the vehicle VA decelerates excessively due to the curve travel control such that the vehicle speed Vs becomes lower than the roundabout target vehicle speed Vra while the vehicle VA is traveling through the roundabout. Furthermore, the present apparatus 10 can reduce the probability that the vehicle VA has difficulty accelerating due to the curve travel control when the vehicle VA exits the roundabout.

The present invention is not limited to the above-described embodiment, and various modifications of the present invention may be adopted.

### <First Modification>

In the embodiment described above, the suppression start condition is satisfied when the vehicle VA reaches the roundabout and the vehicle speed Vs matches the roundabout target vehicle speed Vra. However, the suppression start condition may be satisfied by a time at which it is determined that the vehicle VA has exited the roundabout. In other words, the suppression start condition may be satisfied at the latest when it is determined that the vehicle VA has exited the roundabout.

### <Second Modification>

In the curve travel control, the CPU may perform at least one of a control for suppressing the acceleration of the vehicle VA so that the acceleration G of the vehicle VA does not exceed a predetermined positive maximum acceleration Gmax, and a control for decelerating the vehicle VA until the vehicle speed Vs matches the curve target vehicle speed Vcv.

### <Third Modification>

The start condition for the roundabout travel control may include, at a minimum, the condition that the ECU 20 detects the roundabout (the condition R1). Note that the start distance Dra1 used in the condition R2 of the start condition for the roundabout travel control may be a fixed value regardless of the vehicle speed Vs.

### <Fourth Modification>

The suppression start vehicle speed used in the suppression start condition may be set to a value different from the roundabout target vehicle speed Vra. For example, the suppression start vehicle speed is a set to a value greater than the roundabout target vehicle speed Vra. In this case, the suppression start condition is satisfied when the vehicle VA reaches the roundabout and the vehicle speed Vs becomes equal to or lower than the suppression start vehicle speed.

<Fifth Modification>

The CPU may detect the roundabout based on the image data. For example, the CPU may detect the roundabout when a roundabout sign is included in the image data. Furthermore, the CPU may acquire the distance Dr based on the image data.

### <Sixth Modification>

In the above embodiment, the CPU terminates the display of the roundabout display element by setting the roundabout display flag Xdsp to "0" at the time point when it is determined that the vehicle VA has exited the roundabout (see step 660 in FIG. 6). However, the timing for terminating the display of the roundabout display element is not limited thereto. For example, the CPU may terminate the display of the roundabout display element at the time point when the end time Tth has elapsed from the above determination time point (i.e., when the CPU terminates the suppression of the curve travel control).

The present apparatus 10 may be applied to (or installed in/on) an engine vehicle, a hybrid electric vehicle (HEV), a plug-in hybrid electric vehicle (PHEV), a fuel cell electric vehicle (FCEV), and a battery electric vehicle (BEV). The curve travel control and the roundabout travel control are each a type of autonomous driving control for supporting a driver's operation.

The present invention can be understood as a non-transitory computer-readable storage medium in which a program for realizing the functions of the present apparatus 10 is stored.

## Claims

1. A driving support apparatus (10) configured to perform:
roundabout travel control for controlling a travel state of a vehicle such that a vehicle speed matches a predetermined target vehicle speed when the vehicle travels through a roundabout (step 625, step 1010); and
curve travel control for performing at least one of suppression of acceleration of the vehicle and deceleration of the vehicle when the vehicle travels through a curve (step 425, step 450, step 1010),
wherein the driving support apparatus is configured to:
start the roundabout travel control (step 540) when a start condition including at least a condition that the roundabout is detected in a travel direction of the vehicle (step 510: "Yes") is satisfied (step 535: "Yes"); and
suppress the curve travel control (step 570, step 1005: "Yes", step 1015) when a predetermined suppression start condition is satisfied (step 565: "Yes") after the roundabout travel control starts.

2. The driving support apparatus according to claim 1,
wherein the driving support apparatus is configured to determine that the suppression start condition is satisfied by a time at which it is determined that the vehicle exits the roundabout.

3. The driving support apparatus according to claim 2,
wherein the driving support apparatus is configured to determine that the suppression start condition is satisfied (step 570) when the vehicle enters the roundabout (step 550: "Yes") and the vehicle speed is equal to or lower than a predetermined suppression start speed (step 565: "Yes").

4. The driving support apparatus according to claim 3,
wherein the driving support apparatus is configured to set, in advance, the suppression start speed to be equal to the target vehicle speed used in the roundabout travel control.

5. The driving support apparatus according to any of claims 1 to 4,
wherein the driving support apparatus is configured to terminate the suppression of the curve travel control (step 675) when a predetermined end time has elapsed from a determination time point at which it is determined that the vehicle has exited the roundabout (step 635: "Yes", step 645: "Yes") (step 670: "Yes").

6. The driving support apparatus according to claim 5,
wherein the driving support apparatus is configured to:
determine whether or not the vehicle exits the roundabout by using either a first determination method or a second determination method (step 630, step 640); and
vary the end time based on the determination method used for determining that the vehicle exits the roundabout (step 650, step 680).

7. The driving support apparatus according to claim 6,
wherein,
a timing at which it is determined that the vehicle exits the roundabout is earlier when the first determination method is used than when the second determination method is used; and
the driving support apparatus is configured to set the end time to be longer (step 650) when it is determined that the vehicle has exited the roundabout by using the first determination method (step 635: "Yes") than when it is determined by using the second determination method (step 645: "Yes").

8. The driving support apparatus according to claim 7,
wherein the driving support apparatus is configured to:
determine, in the first determination method, whether or not the vehicle exits the roundabout based on an operation performed by a driver on a steering wheel or a turn signal lever (steps 800 to 895); and
determine, in the second determination method, whether or not the vehicle exits the roundabout based on map data in which a position of the roundabout is registered and a current position of the vehicle (steps 900 to 995).

9. A vehicle control method for causing a computer mounted on a vehicle to perform:
roundabout travel control for controlling a travel state of the vehicle such that a vehicle speed matches a predetermined target vehicle speed when the vehicle travels through a roundabout (step 625, step 1010); and
curve travel control for performing at least one of suppression of acceleration of the vehicle and deceleration of the vehicle when the vehicle travels through a curve (step 425, step 450, step 1010),
wherein the vehicle control method comprises:
a step of starting the roundabout travel control (step 540) when a start condition including at least a condition that the roundabout is detected in a travel direction of the vehicle (step 510: "Yes") is satisfied (step 535: "Yes"); and
a step of suppressing the curve travel control (step 570, step 1005: "Yes", step 1015) when a predetermined suppression start condition is satisfied (step 565: "Yes") after the roundabout travel control starts.

10. A program for causing a computer mounted on a vehicle to perform:
roundabout travel control for controlling a travel state of the vehicle such that a vehicle speed matches a predetermined target vehicle speed when the vehicle travels through a roundabout (step 625, step 1010); and
curve travel control for performing at least one of suppression of acceleration of the vehicle and deceleration of the vehicle when the vehicle travels through a curve (step 425, step 450, step 1010),
wherein the program is configured to cause the computer to:
start the roundabout travel (step 540) control when a start condition including at least a condition that the roundabout is detected in a travel direction of the vehicle (step 510: "Yes") is satisfied (step 535: "Yes"); and
suppress the curve travel control (step 570, step 1005: "Yes", step 1015) when a predetermined suppression start condition is satisfied (step 565: "Yes") after the roundabout travel control starts.
